# EUROPEAN PATENT APPLICATION

(11) **EP 0 959 537 A1**
(43) Date of publication of application: **24.11.1999**
(21) Application number: 99107903.9
(22) Date of filing: 21.04.1999
(51) Int. Cl.: H01R 43/00, H01R 13/52, H01R 13/533, H01R 43/033, H02G 15/00

(54) **Weather-proofing method and apparatus for components such as cable connectors**

(30) Priority: 18.05.1998 US 80768
(71) Applicant: ANDREW A.G., CH-8184 Bachenbulach (CH)
(72) Inventor: Paske, Jamie M., Oak Lawn, IL 60453 (US)
(74) Representative: Grünecker, Kinkeldey, Stockmair & Schwanhäusser Anwaltssozietät

(57) **Abstract**

A method for weather-proofing a structure or device such as a connection for a coaxial cable utilizing coaxial connectors, and the like, said method comprising the steps of sealing about the structure, displacing air about the structure to minimize condensation, and dampening vibration about the structure.

## Description

### FIELD OF THE INVENTION

The invention is directed generally to methods and apparatus for weather-proofing structures or devices such as electrical components, and is disclosed more particularly with reference to the employment of a novel and improved method and apparatus for weather-proofing connections between coaxial cables employing coaxial connectors or the like.

### BACKGROUND OF THE INVENTION

While the invention may be used in connection with various devices and/or structures, the embodiments described herein are shown and described, for purposes of giving particular examples, with reference to the problem of weather-proofing connections between coaxial cables.

Connections between electrical cables such as coaxial cable or the like may employ weather-proofing methods or apparatus, particularly where the cables and associated connectors are intended for exterior or out-of-doors use. A number of considerations apply in obtaining effective weather-proofing of such connections. For example, it is desirable to prevent moisture on other environmental elements from entering the connection, and possibly degrading the electrical characteristics of the connection such as contact resistance and the like. This may occur as a result of corrosion of the materials of the connectors, deposit of other materials upon contact surfaces of connectors, or other physical or chemical processes which occur as a result of the influence of moisture or other environmental factors, contaminants, or other foreign materials upon the connectors.

As a related matter, it is also desirable to minimize condensation about the connector. That is, even though environmental moisture and the like is excluded, changes in temperature and humidity and the like may cause condensation to form about the connector.

Thirdly, some means of maintaining proper connector torque or desired connection forces between the elements of a connector, while in use in the field, is desirable. Maintaining the desired forces of engagement between connector parts helps to maintain desired electrical characteristics of the connector such as contact resistance and the like. Various forces such as wind loading or shaking forces may occur in out-of-doors cables and associated connections which give rise to vibrations which tend to loosen the connections.

Heretofore, various methods of wrapping and sealing such coaxial connections have been utilized. In one method, a quantity of pliable butyl rubber is applied about the connection, usually in the form of a sticky, tape-like material which is wrapped around the connection. However, this butyl tape tends to be sensitive to temperature variations, becoming soft and sticky in hot temperatures and relatively rigid and nonpliable in cold temperatures. These characteristics can impede installation and/or removal in extreme temperature conditions. For example, in relatively hot temperatures, the butyl material can transfer onto the hands and equipment of the installer, further impeding installation and/or removal. In cold weather the tape is difficult to wrap so as to closely conform to the connection, as it becomes rigid and unpliable. Thus, the proper application of sealing methods using such butyl rubber tape to coaxial connectors may be impeded by the characteristics of the butyl material, resulting in either incomplete or improperly sealed connections, the creation of voids or bubbles in which moisture can condensate, and relative difficulty during either installation or removal in extreme temperatures, and befouling of equipment or of the hands of the installer.

A second method sometimes utilized is the provision of a cold shrink product which is stretched onto a corrugated tube and transferred from the tube onto a cable to overlie the connectors and area of connection therein. The corrugated tube is a relatively elongated member and must be removed and discarded following application of the shrink product. This can cause some difficulty in handling the elongated tube and placing it over the cable and transferring the stretched material over the connection and in proper alignment with the connection. This also results in some amount of excess material, clutter and the like. These factors can be particularly inconvenient when working on overhead wires or the like from a tower or other elevated support structure in which space is generally limited. Also, packaging, shipping and storage of quantities of such elongated tubular corrugated carriers with associated cold shrink product thereon can be inconvenient.

### SUMMARY OF THE INVENTION

One aspect of the invention provides an improved method for weather-proofing a device or structure such as coaxial connectors in a coaxial cable, or the like. In accordance with another aspect of the invention there is provided apparatus for weather-proofing a structure or device such as a coaxial connector in a coaxial cable, or the like.

In accordance with a more specific aspect of the invention, there is provided a method for weather-proofing a connection in a coaxial cable utilizing coaxial connectors, or the like, said method comprising the steps of sealing around the cable and connections, displacing air about the connection to minimize condensation, and dampening vibration about the connector so as to maintain connector torque.

In accordance with another aspect of the invention, there is provided an apparatus for weather-proofing a connection in a coaxial cable formed with coaxial connectors or the like, the apparatus comprising a sealing member that fits around the cable and the connectors and seals the connection, an air-displacing member that displaces air about the connection and minimizes condensation, and a vibration-dampening member that maintains connector torque.

In accordance with yet another aspect of the invention, there is provided a method of providing a re-enterable weather-proofing protector for a coaxial connection formed by coaxial connectors in a coaxial cable, or the like, said method comprising the steps of sealing around the connection, displacing air about the connection to minimize condensation, and dampening vibration about the connector so as to maintain connector torque, and re-entering said weather-proofing protector if desired.

### BRIEF DESCRIPTION OF THE DRAWINGS

In the drawings:
FIG. 1 is an exploded perspective view illustrating one embodiment of a weather-proofing method and apparatus in accordance with the invention.
FIG. 2 is an exploded perspective view illustrating a second embodiment of a weather-proofing method and apparatus in accordance with the invention.
FIG. 3 is a perspective view illustrating another embodiment of a weather-proofing method and apparatus in accordance with the invention.
FIG. 4 is an elevation, partially in section, further illustrating the method and apparatus of FIG. 3.

### DESCRIPTION OF ILLUSTRATIVE EMBODIMENTS

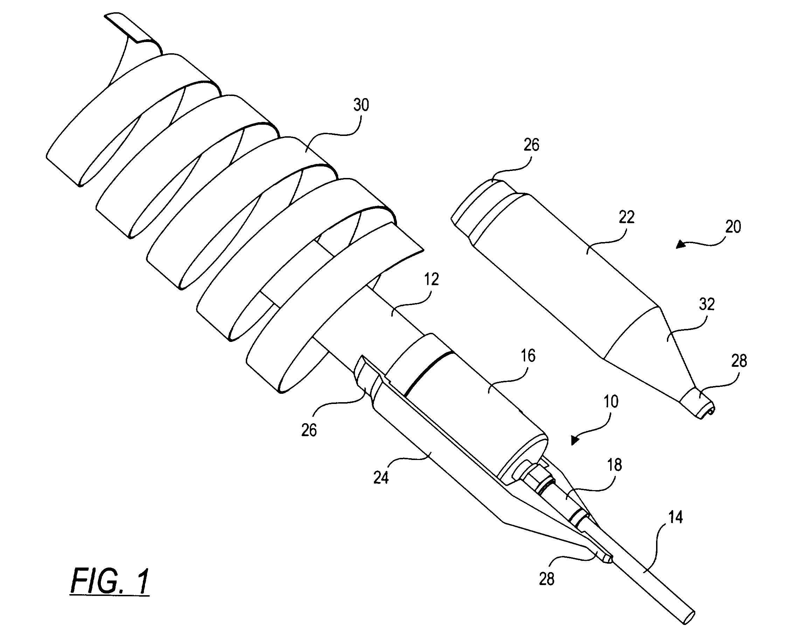

Referring now to the drawings and initially to FIG. 1, there is illustrated a first embodiment of a method and apparatus for weather-proofing in accordance with the invention. While the embodiments of the invention illustrated herein are shown in connection with a coaxial connector for interconnecting to lengths or sections of coaxial cable, the invention may find other applications as well, such as connections between various other types of cables or wires, including individual wires or multiple wires, by various types of connectors or splice connections or the like. The invention may also be useful in connection with weather-proofing of the devices and structures, including, but not limited to, electrical equipment.

In FIG. 1, there is illustrated a connection 10 between a relatively large diameter coaxial cable 12 and a relatively smaller diameter coaxial cable 14. This connection employs a suitable coaxial connector comprising a first connector part 16 of a relatively larger diameter for accommodating the large diameter cable 12 and a second cooperatively interfitting connector portion 18 which is of a smaller diameter for accommodating the relatively smaller cable 14. It should be noted that the method and apparatus of claim 1 are equally applicable to weather-proofing and sealing connections between like-size cables and employing like-size connector elements.

Referring still to FIG. 1, a foam cast 20 is provided, and in the illustrated embodiment, takes the form of two essentially symmetrical halves 22 and 24 which may be interfitted about the external surface of the connectors 16 and 18. The foam cast 20 is of sufficient length or axially extent to completely cover the connectors 16 and 18 and includes additional extensions 24 and 26 at the respective ends thereof for sealingly engaging and overlying a short length of the respective cables 12 and 14 to either side of the connectors 16, 18. The connectors and this short length of cable to either side thereof may be referred to as the "connection," which is to be weather-proofed by the present invention.

The foam cast 20 preferably comprises a closed cell pre-molded foam member which has an integral, relatively firmer or harder outer skin to provide some rigidity to control its shape during application over the cables 12, 14 and connectors 16, 18. At the same time, the interior part of the foam cast 20 is somewhat more pliable to allow the same to essentially form about the outer contours of the cables 12, 14 and connectors 16, 18 as the two sections or halves 22 and 24 are engaged and pressed thereabout.

Some form of tape or wrapping 30 is then used to hold the foam cast in place about the cables 12, 14 and connectors 16, 18 and to provide additional sealing. In the illustrated embodiment, this tape or wrap 30 may comprise a vinyl tape or a fusion tape that amalgamates to itself when stretched and wrapped over the foam cast 20. One example of a suitable material for the wrap or tape is an ethylene propylene polymer (EPR) tape with fusion, such as SCOTCH™, 130C Linerless Rubber Splicing Tape from 3M, Electrical Products Division, Austin, Texas.

If desired, the halves 22 and 24 could be hingedly joined along one edge (not shown) and provided with interfitting latching members (not shown), for example, similar to one of the sets of latches 52, 54 (see below) on an opposite edge. This would form a one-piece, "clamshell" type of configuration which may be closed securely around the connection 10, and latched, and also unlatched and removed for easy re-entry, following removal of the tape 30.

Examples of suitable materials for the closed cell pre-molded foam cast 20 are as follows: 1) Expanded polypropylene (EPP) foam such as NEOPOLEN®P from BASF AG; or EPERAN PP from Kaneka Texas Corporation; or 2) Cross linked polyethylene foam from Oletex of South Holland, Illinois or Sentinel Products Corp. of Hyannis, Massachusetts.

The foregoing method and apparatus possesses a number of advantageous features. For example, the provision of the pre-molded foam cast 20 essentially controls the geometry or shape of the outer surface to be wrapped, such that a controlled or predictable quantity of wrapping 30 may be used and even provided in a kit or the like. Alternatively, the wrap 30 may be provided in a continuous rolled form with the quantity to be utilized being selected by of the installer. The foam cast 20 also helps to lessen the effect of the relatively abrupt transition between the cable and connector sizes (in the embodiment shown in FIG. 1), by providing a relatively gradual or tapered outer surface 32 in this region.

Furthermore, the foam cast 20 tends to displace air to minimize condensation and air pockets about the connection 10, while at the same time dampening vibration that may result from wind loading or shaking forces. The tape 30 seals out moisture or other environmental elements and/or contaminants. The method produces a relatively clean, simple and quick installation. In a connection between a larger transmission line cable to a smaller diameter cable such as a jumper or the like, the foam cast 20 defines and controls the wrap geometry. This allows the connection to be over-wrapped effectively with a controlled quantity of wrapping material in a "football shape" that is generally accepted in the industry. However, as mentioned above, an equivalent apparatus and method may be utilized to interconnect cables of the same size, or to weather-proof other devices or structures, without departing from the invention.

Moreover, the foam cast 20 and wrap 30 are generally lighter in weight than the prior art butyl tape material. The resulting construction is also more aesthetically acceptable since the wrap is generally more consistent and controlled in view of the controlled outer shape of the foam cast's geometry. Moreover, this configuration permits relatively quick and clean removal, in contrast to the relatively sticky and hard to remove butyl rubber tape of the prior art. A longitudinal slit down the side of the wrap 30 may allow the foam cast 20 to be safely and easily removed. Unlike the prior art butyl tape material, the foam cast is relatively insensitive to variations in temperature facilitating both installation and performance under a variety of environmental conditions. The material of the foam cast will not stick to the hands or equipment of the installer as is the case with the butyl tape, thus further facilitating both installation and removal. The foam cast 20 and wrap 30, in the case of a fusion tape, is intended to withstand immersion in one meter of water for 24 hours.

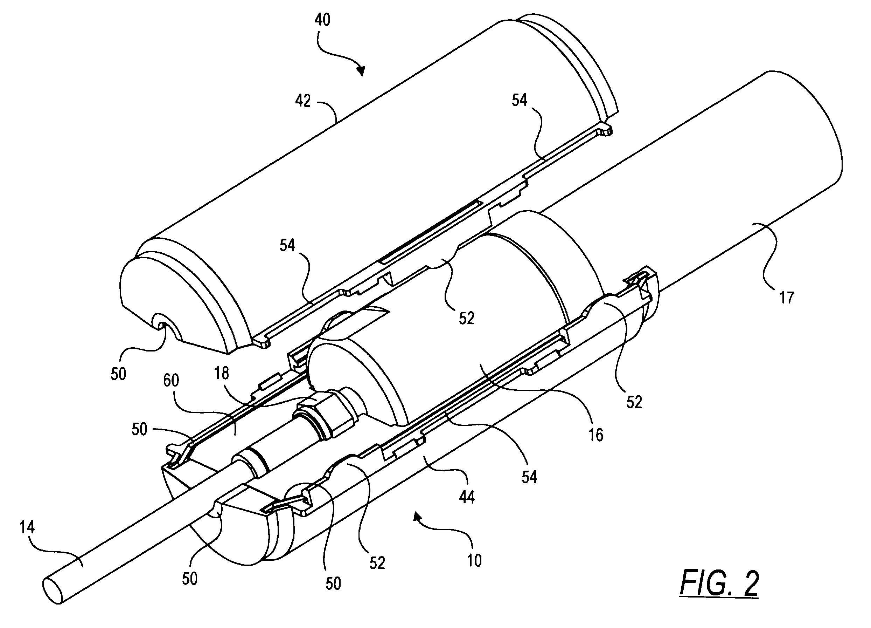

Referring next to FIG. 2, a second embodiment of the invention is illustrated. In FIG. 2 the weather-proofing is provided the form of a snap-on rigid housing 40 which may be a two-piece assembly. In the illustrated embodiment, the housing 40 comprises two complementary or symmetrical housing halves 42, 44. The same type of cable connection 10 as in FIG. 1 is illustrated in FIG. 2, and like reference numerals are used to designate the like parts and components, including cables 12, 14 and respective connectors 16, 18. As in FIG. 1, this may comprise a connection between a larger diameter transmission line cable and a smaller diameter cable such as a jumper. However, the invention as embodied in FIG. 2 may be utilized with like-size cables and connectors or with other devices without departing from the invention. The housing halves 42 and 44 together form a composite housing 40 which is generally cylindrical and hollow. The longitudinal or axial extent of the housing 40 is sufficient to cover the entire axial length of the respective connectors 16 and 18 and to extend for some additional distance along the respective cables 12 and 14 so as to completely enclose and seal the connection 10. The housing or shell 40 may comprise a relatively rigid, "weatherable" plastic such as Valox 357U or 364, a Polyester/PBT Thermoplastic, from GE Plastics.

A seal is effected by the provision of a seal of a lower durometer compressible seal or sealing material 50 which extends along respective interfitting edges of the housing halves 42 and 44 as well as along those surfaces which surroundingly engage with the respective cables 12 and 14 upon assembly therewith. A suitable material for the compressible seal is Santoprene 101-64, a Thermoplastic Elastomer, from Advanced Elastomer Systems.

In operation, the symmetrical or complementary housing halves 42, 44 are aligned over the connection or device to be sealed and snapped together. In this regard, complementary, aligned sets of snap-tabs 52 and lips 54 may be formed along respective facing and interengaging edges of the respective housing halves 42 and 44. In practice, the housing halves 42 and 44 may be identical with the top housing half 42 as shown in FIG. 2 being rotated 180° about the longitudinal axis defined by the cables 12 and 14 relative to the housing half 44. A quantity of foam material 60 provided in the hollow interior of the housing 40 is pressed into contact with the connectors 16 and 18 to displace air pockets, thereby discouraging condensation, fungus, or mildew growth or the like about the connectors. This foam materials also contributes to dampening of vibrations, thereby helping to maintain the recommended torque or connection forces between the connectors 16 and 18. A relatively soft, closed cell foam may be used for this purpose, so as to closely conform to the external surfaces of the connectors and eliminate air pockets.

The invention as embodied in FIG. 2 is also re-enterable and re-useable, by the expedient of releasing the releasable snap-locked engagement (e.g. tabs 52 and lips 54) between the respective housing halves 42 and 44. Installation and removal of the housing halves 42 and 44 is relatively simple and rapid, by engaging or disengaging the respective interlocking snap-tabs and cooperating lips 52 and 54 manually. A minimal number of parts and components are utilized, namely, only the housing halves 42 and 44, the seal 50, and a quantity of foam material 60. This arrangement is also designed to withstand immersion in one meter of water for 24 hours. Unlike the above-mentioned prior art butyl tape wrap method, and like the embodiment of FIG. 1, the embodiment of FIG. 2 is relatively insensitive to variations in temperature either during installation or removal or in service.

Alternatively, the housing halves 42, 44 may be hingedly joined along one edge, and have the tabs and lips 52, 54 only along the opposite edge, to form a "clamshell" type of configuration.

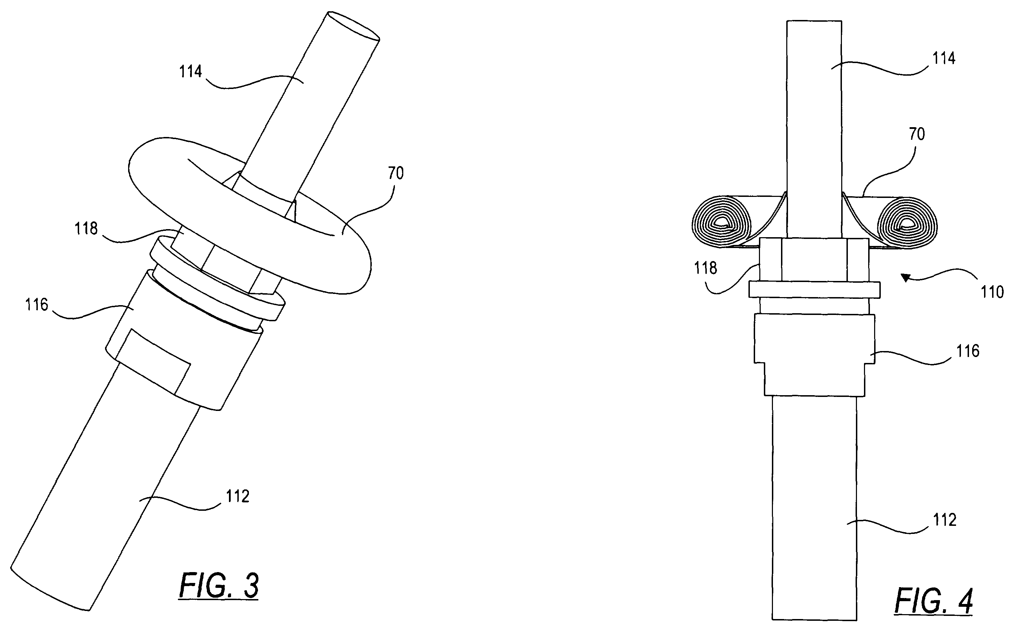

Referring now to FIGS. 3 and 4 yet another embodiment of the invention is illustrated. In FIG. 3, an elongated extruded tube 70 of an elastomeric compound is stretched to an inner diameter that is larger than the maximum outer diameter of the connection or other device to be covered. In the illustrated embodiment, a similar connection between a larger diameter cable 112 and a smaller diameter cable 113, utilizing cooperating interengaged connector elements 116, 118 is illustrated. This connection is designated generally by reference numeral 110. The elastomeric compound of the tube 70 may include such materials such as: 1) a Thermoplastic material from Teknor Apex Co. of Pawtucket, Rhode Island; or 2) A silicone material from ARLON Silicone Technologies Division of Delaware. These materials can be stretched as described and illustrated herein and then shrink down to a smaller recovery diameter.

The recovery diameter of the tube 70 is preferably somewhat smaller than the minimum diameter of the connection or device to be covered. Thus, one end of the tube 70 closely engages the smaller diameter cable 114 in the example shown in FIGS. 3 and 4. Prior to use, the extruded tube 70 is rolled into a generally toroidal or doughnut shape to provide a compact and convenient package for later use in the field. In use, the rolled-up tube 70 is placed over one end of the connection or other device. In FIGS. 3 and 4 this comprises the smaller diameter cable 114. The tube may then be unrolled by toward the opposite cable 112. Optionally, a toroidal core (not shown), for example, of corrugated material may be used to roll-up the tube.

When unrolled, the elastomeric tube shrinks down toward its recovery diameter so as to generally conform to the external shape of the connection or other device, including the external configuration of the connectors 116 and 118 and of the cable 112. This acts both to seal the device against the environmental elements or contaminants as well as removing air voids or the like in which condensation might otherwise form. The elastomeric material also acts to dampen vibrations that might result from wind loading or shaking forces. The toroidal or doughnut shaped core 74 may then be discarded or may be maintained as an integral part of the tube 70 whereupon it can be used to unroll the tube for re-entry and/or re-use of the tube 70. Alternatively, the seal formed in the fashion shown in FIGS. 3 and 4 may be re-entered by producing a longitudinal slit down a side of the tube 70, in which case, however, it would not be re-used. This apparatus and method, is believed to be more compact, quicker and easier to install in the field than the cold shrink wrap procedure described hereinabove wherein a cold shrink is carried on an elongated corrugated tube. The embodiment of FIGS. 3 and 4 is also designed to withstand immersion in one meter of water for 24 hours.

What has been illustrated and described herein are a number of embodiments of a weather-proofing method and apparatus for coaxial cable connections or other devices. It should be noted that each of the above-described embodiments have in common at least thee steps, features or members, namely: 1) sealing: a sealing member that fits around and weather-proofs the connection or other device; 2) air displacing: an air displacing member to minimize condensation; and 3) vibration-dampening: a vibration-dampening member to help maintain connector torque. It will be noted that in the embodiment of FIG. 3 the elastomeric tube provides all three of these members or steps. The invention produces a number of advantages and/or benefits, some of which have been discussed hereinabove and which are summarized as follows:
- Displacing air, minimizing the pockets around the connector or device, to eliminate potential for condensation, prior to sealing;
- Dampening vibration resulting from wind loading or shaking forces to maintain the recommended connector torque;
- Sealing out the environmental elements such as, but not limited to, dust, rain and snow thereby maintaining the integrity of the transmission line electrical performance, for example;
- Accommodating to various cable diameter transitions and contours of various devices;
- Eliminating fungus and mildew growth potential as a result of condensation;
- Ease and repeatability of assembly resulting from minimized instructions;
- Sealing on irregular surfaces such as corrugated coaxial cable of varying diameters;
- Clean connector or device upon re-entry or removal of weather-proofing system;
- Insensitive to installation temperatures;
- Insensitive to removal temperatures;
- Easier to install and remove due to no materials transferring onto hands;
- Withstand immersion in one meter of water for 24 hours;
- Reducing installation time;
- Fewer or no materials to discard after installation; and
- No installation tools required.

While the invention may be susceptible to various modifications and alternative forms, specific embodiments have been shown and described herein above by way of example. It should be understood, however, that it is not intended to limit the invention to the particular forms disclosed. On the contrary, the intention is to cover all modifications, equivalents and alternatives falling within the spirit and scope of the invention as defined by the dependent claims.

## Claims

1. A method for weather-proofing a structure or device such as a connection for a coaxial cable utilizing coaxial connectors, and the like, said method comprising the steps of:
sealing about the structure;
displacing air about the structure to minimize condensation; and
dampening vibration about the structure.

2. The method of claim 1 wherein said steps of sealing, displacing and vibration dampening are performed by prestretching an extruded tube of an elastomeric compound, wrapping the prestretched tube in a generally toroidal configuration; placing the toroidal configured tube one end of the structure; unrolling the tube over the connection; and permitting the elastomeric tube to shrink down to its recovery diameter conforming to the structure.

3. The method of claim 1 wherein the steps of sealing, displacing and vibration dampening comprise providing a foam cast having a pliable interior and a relatively harder exterior surface, pressing said cast about said structure to cause said pliable interior to form about said connection to minimize air pockets; stretching and wrapping a tape around said foam cast for sealing said structure, said foam cast and said tape together performing said steps of sealing, displacing of moisture and vibration dampening.

4. The method of claim 1 wherein the steps of sealing, displacing moisture and vibration dampening comprise providing a two-piece rigid housing having a weatherable plastic exterior and lower durometer compressible seal; introducing a quantity of a pliable foam filler into an interior of said two-piece housing assembly for conforming to an external contour of said structure for displacing air and dampening vibration; placing said two-piece assembly about said structure and snapping together said housing assembly so as to displace the compressible seal forming a moisture-proof seal around the structure.

5. Apparatus for weather-proofing a structure or device such as a connection formed with coaxial connectors or the like in a coaxial cable and the like, said apparatus comprising:
a sealing member that fits around the connection and seals the structure;
an air-displacing member that displaces air about the structure and minimizes condensation; and
a vibration-dampening member.

6. The apparatus of claim 5 wherein said sealing member, said air-displacing member and said vibration-dampening member comprise an extruded tube of an elastomeric compound that is prestretched to an inner diameter which is larger than an outer diameter of the structure or device to be weather-proofed; said extruded and prestretched tube being initially rolled into a generally toroidal configuration, such that the same may be placed over one end of the structure and rolled out over the connection whereupon the prestretched elastomeric tube shrinks down toward its recovery diameter conforming to the structure to seal out environmental elements, dampen vibration and displace moisture.

7. The apparatus of claim 5 wherein said air-displacing member and said vibration-dampening member comprise a closed cell pre-molded foam cast placed about said structure, said cast having a relatively harder skin and a relatively pliable interior so as to form closely around the structure to minimize air pockets; and wherein sealing member comprises a quantity of tape stretched and wrapped around an external surface of the foam cast, said tape acting to seal out moisture and other environmental elements.

8. The apparatus of claim 5 wherein said sealing member, said air-displacing member and said vibration-dampening member include a snap-on housing comprising a two-piece assembly having integral seals of a relatively softer sealing compound; and a quantity of foam filler material inside of said housing for forming about the structure or device so as to displace air pockets and discourage condensation, fungus or mildew growth and to dampen vibration.

9. The apparatus of claim 8 wherein said two-piece housing comprises complementary housing halves which are alignable to either side of structure.

10. The apparatus of claim 9 wherein each of said housing halves comprises a rigid weatherable plastic shell, and wherein said integral seals comprise a lower durometer compressible sealing material about surfaces thereof which engage the other housing half and the structure.

11. The apparatus of claim 9 wherein said housing halves include cooperating aligned interfitting means for releasably engaging said housing halves about said structure and causing said seals to displace for sealing engagement.

12. The apparatus of claim 7 wherein said foam cast comprises two symmetrical halves.

13. A method of providing a re-enterable weather-proofing protector for a structure or device such as a connection formed by coaxial connectors in a coaxial cable, or the like, said method comprising the steps of:
sealing around the structure;
displacing air about the structure to minimize condensation;
dampening vibration about the structure; and
re-entering said weather-proofing protector if desired.

14. The method of claim 13 wherein said steps of sealing, displacing and vibration dampening are performed by prestretching an extruded tube of an elastomeric compound, wrapping the prestretched tube in a generally toroidal configuration; placing the toroidal configured tube at one end of the structure; unrolling the tube over the structure; and permitting the elastomeric tube to shrink down to its recovery diameter conforming to the cable and structure.

15. The method of claim 14 wherein the step of re-entering comprises slitting extruded tube longitudinally.

16. The method of claim 14 wherein the step of re-entering comprises re-rolling said elastomeric tube into said toroidal configuration.

17. The method of claim 14 wherein the steps of sealing, displacing and vibration dampening comprise providing a foam cast having a pliable interior and relatively harder exterior surface, pressing said cast about said structure to cause said pliable interior to form about said connection to minimize air pockets; stretching and wrapping a tape around said foam cast for sealing said structure, said foam cast and said tape together performing said steps of sealing, displacing of moisture and vibration dampening, and wherein the step of re-entering comprises slitting said tape longitudinally.

18. The method of claim 14 wherein the steps of sealing, displacing moisture and vibration dampening comprise providing a two-piece rigid housing having a weatherable plastic exterior and lower durometer compressible seal; introducing a quantity of a pliable foam filler into an interior of said two-piece housing assembly for conforming to an external contour of said structure for displacing air and dampening vibration; placing said two-piece assembly about said structure and snapping together said two-pieces of said housing assembly so as to displace the compressible seal for forming a moisture-proof seal around the structure.
